# EUROPEAN PATENT SPECIFICATION

(11) **EP 1 711 940 B1**
(45) Date of publication and mention of the grant of the patent: **23.04.2008**
(21) Application number: 05702727.8
(22) Date of filing: 19.01.2005
(51) Int. Cl.: G11B 7/095

(54) **DISC TILT DETECTING DEVICE**
SCHEIBENNEIGUNGS-DETEKTIONSEINRICHTUNG
DISPOSITIF DE DETECTION D'INCLINAISON DE DISQUE

(30) Priority: 28.01.2004 EP 04100290
(43) Date of publication of application: 18.10.2006
(73) Proprietor: Koninklijke Philips Electronics N.V., 5621 BA Eindhoven (NL)
(72) Inventor: VAN SOMEREN, Bob, NL-5656 AA Eindhoven (NL)
(74) Representative: van Oudheusden-Perset, Laure E.
(86) International application number: PCT/IB2005/050228
(87) International publication number: WO 2005/073962

(56) References cited:
- WO-A-02/05271
- US-A- 4 631 712
- US-A- 5 202 864
- PATENT ABSTRACTS OF JAPAN vol. 2002, no. 04, 4 August 2002 (2002-08-04) & JP 2001 344790 A (MATSUSHITA ELECTRIC IND CO LTD), 14 December 2001 (2001-12-14)
- PATENT ABSTRACTS OF JAPAN vol. 2003, no. 02, 5 February 2003 (2003-02-05) & JP 2002 288859 A (TOSHIBA CORP), 4 October 2002 (2002-10-04)

## Description

The invention relates to a device for scanning an optical disc, the disc comprising a pattern of substantially parallel data tracks, the device comprising an optical pick up unit for converging a light beam into a spot on a data track of the pattern, means for moving the spot relative to the pattern, means for determining a radial tracking error signal, the radial tracking error signal indicating a deviation of the spot relative to the data track, and means for detecting a tilt angle between an optical axis of the pick up unit and the optical disc.

The invention also relates to a method and a computer program for detecting a tilt angle of a part of an optical disc, the method comprising the steps of moving a light spot relative to a pattern of substantially parallel data tracks on the optical disc, determining a radial tracking error signal indicating a deviation of the spot relative to a data track and detecting the tilt angle of the part of the optical disc.

The European patent EP 0486613 describes an optical disc player comprising an optical pick up unit (OPU), provided with an objective lens for converging a light beam into a spot on an optical disc. After reflection at the optical disc and passing of the lens, the light beam is detected by a photo detector. The optical disc player also comprises a tracking servo unit for keeping the spot on-track during the reading of data from the disc. The tracking servo radially moves the OPU in accordance with a radial tracking error. The radial tracking error indicates the deviation of the spot relative to a data track on the optical disc. The player also comprises a tilt servo unit for controlling the light beam to be perpendicular to the disc surface, according to a disc tilt signal. For detecting disc tilt the tracking servo is turned off. When an information reading laser beam is in on-track state, i.e. when the spot of the laser beam is on the center of a recording track, a sample and hold circuit samples a radial push pull signal (RPP). The RPP signal is obtained by determining a differential output of two halves of a split photo detector. The obtained RPP signal is a measure for the beam landing error, possibly caused by disc tilt. A beam landing error may also be caused by relative positional division between the objective lens and the photo detector of the optical pick up unit (OPU), which OPU serves for reading data from the optical disc. The method for detecting disc tilt, described in EP 0486613, assumes a perfect alignment of the objective lens and the photo detector. In this event the beam landing error is regarded to be caused by disc tilt only and the RPP signal is issued as a disc tilt detecting signal.

A drawback of the method for detecting disc tilt, described in EP 0486613 is that a detected beam landing error, caused by misalignment of optical parts of the pick up unit will be misinterpreted as a disc tilt error. This misinterpretation may result in an offset in the disc tilt signal and an incorrect adjustment by the tilt servo unit. This may lead to a problematic reading of data from the disc.

US 5,202,864 describes an apparatus for reading optical discs. A track deviation signal is generated, and asymmetry in the track deviation signal may be caused by inclination of the disc. A DC component in the track deviation signal is detected and used for controlling actuators. WO 02/05271 describes a method for reading of an optical disc. The disc may be scanned to find surface errors. The position of surface errors is stored in an error map.

It is an object of the invention to provide a device for scanning an optical disc with means for detecting disc tilt, which means is arranged for accurately detecting a disc tilt error signal by reducing the offset in the disc tilt error signal.

According to the present invention, there is provided a device as defined in claim 1, and a method as defined in claim 10.

One period in the periodic signal corresponds to the pitch of the data tracks. The signal of the period is symmetric when no disc tilt occurs and is repeated for every track. When disc tilt occurs the signal during the period becomes asymmetric. Disc tilt is detected by detection of asymmetry in the signal during the period

With the invention, in contrast with the prior art, beam landing errors can be distinguished from disc tilt errors. Beam landing errors may, depending on the type of radial tracking error signal, cause a shift of the periodic signal, but do not substantially affect the symmetry of the signal. Detection of asymmetry in the periodic signal is therefore an adequate method for determining a disc tilt error signal and reduces the possibility that an offset occurs in the disc tilt error signal, for example, as a result of a beam landing error.

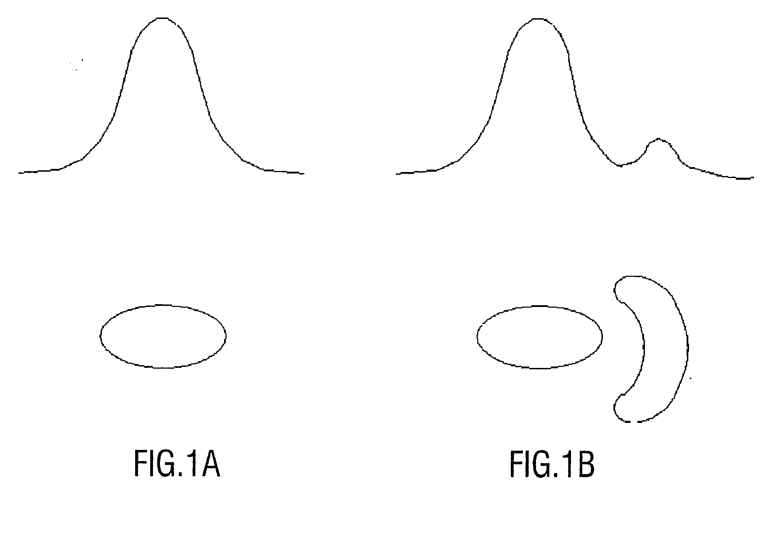

The invention relies on the insight that the periodic signal, obtained from the radial tracking error signal while moving across the pattern, is asymmetrically deformed when disc tilt occurs. The deformation of the periodic signal is caused by an asymmetry in the spot on the pattern of data tracks. The upper part of Figure 1 a shows an intensity of the spot as a function of radial position in the event that there is no disc tilt. The lower part of Figure 1a shows an intensity contour of the spot. In this event the spot is symmetric. The effect of disc tilt on the spot on the pattern of data tracks is shown in Figure 1b. The upper part of Figure 1b shows an intensity of the spot as a function of radial position in the event that disc tilt occurs. In Figure 1b there is an extra lobe at one side of the spot. The lower part of Figure 1b shows an intensity contour of the spot. In this event the spot is asymmetric because of the lobe at one side of the spot.

In one embodiment the means for detecting the tilt angle is arranged for integrating the periodic signal over an integer number of periods. The integer number being greater than or equal to one. In general, when no disc tilt or beam landing error occurs, the radial tracking error signal is zero when the spot is in on-track position. Regardless of the type of radial tracking error signal, the value of the signal represents a certain amount of radial deviation and the sign of the signal represents the direction of the deviation. Hence, a part of a period of the periodic signal is below zero and another part is above zero. When no disc tilt occurs, the periodic signal is symmetric and the integral over a whole period of the signal is zero. When disc tilt occurs, the periodic signal is asymmetric and the integral over the whole period of the signal is not zero. Evidently, also the integral over a plurality of whole periods is not zero. The greater the integral, the greater the asymmetry.

In an embodiment the means for detecting the tilt angle is arranged for determining a shift of a zero crossing of the periodic signal. When no disc tilt occurs and the spot center is located at the center of a track, the radial tracking error signal is zero. When the spot is located halfway between two tracks, the radial tracking error signal is also zero. The distance between two zero crossings equals half the track pitch (the track pitch of a DVD is about 0.37 µm). When disc tilt occurs, the periodic signal becomes asymmetric. As a symptom of the asymmetry the zero crossings in the periodic signal are shifted. When no disc tilt occurs the distances between subsequent zero crossings are equal, even in the event of a beam landing error. When disc tilt does occur the distances are not equal. A shift of the zero crossings may be detected by comparing the distances between subsequent zero crossings.

An embodiment of the device according to the invention comprises means for memorizing detected tilt angles for positions on the disc and means for creating a tilt map of the optical disc depending on memorized tilt angles. The tilt map may be used later during scanning of the disc for estimating tilt angles for positions of which the tilt angle is not measured. A correction, depending on the location of the spot on the disc, may then be applied to the scanning process for neutralizing possible negative effects of the disc tilt, such as problems with reading data from the disc. A device may further comprise a memory for storing models of tilted discs, means for comparing the memorized tilt angles to the models for selecting an appropriate model, which model resembles the disc and wherein the means for creating the tilt map are arranged for creating a tilt map depending on the memorized tilt angles and the appropriate model. Based on detected tilt angles at a few radial and angular positions on the disc and the model, tilt angles may be calculated for all positions on the disc.

These and other aspects of the invention are apparent from and will be elucidated with reference to the embodiments described hereinafter.

In the drawings:
Figure 1a shows an intensity function and an intensity contour of a spot on a flat disk;
Figure 1b shows an intensity function and an intensity contour of a spot on a tilted disk;
Figure 2 shows a block diagram of a device according to the invention;
Figure 3 shows one period of a periodic radial tracking error signal (RPP) for a flat disc and for a tilted disc;
Figure 4 shows one period of a periodic radial tracking error signal (DTD) for a flat disc and for a tilted disc;
Figure 5 shows a correlation between disc tilt and an integral over a period of the periodic radial tracking error signal (RPP);
Figure 6 shows a correlation between disc tilt and an integral over a period of the periodic radial tracking error signal (DTD);
Figure 7 shows a block diagram of a device according to the invention, comprising means for creating a tilt map;
Figure 8 shows a block diagram of a device according to the invention, using tilt models for creating a tilt map;
Figure 9 shows an exaggerated example of a non flat, dish shaped disc;
Figure 10 shows an exaggerated example of a non flat, saddle shaped disc; and
Figure 11 shows a flow diagram of a preferred disc tilt detection procedure according to the invention.

In the diagrams below, similar references designate similar elements;

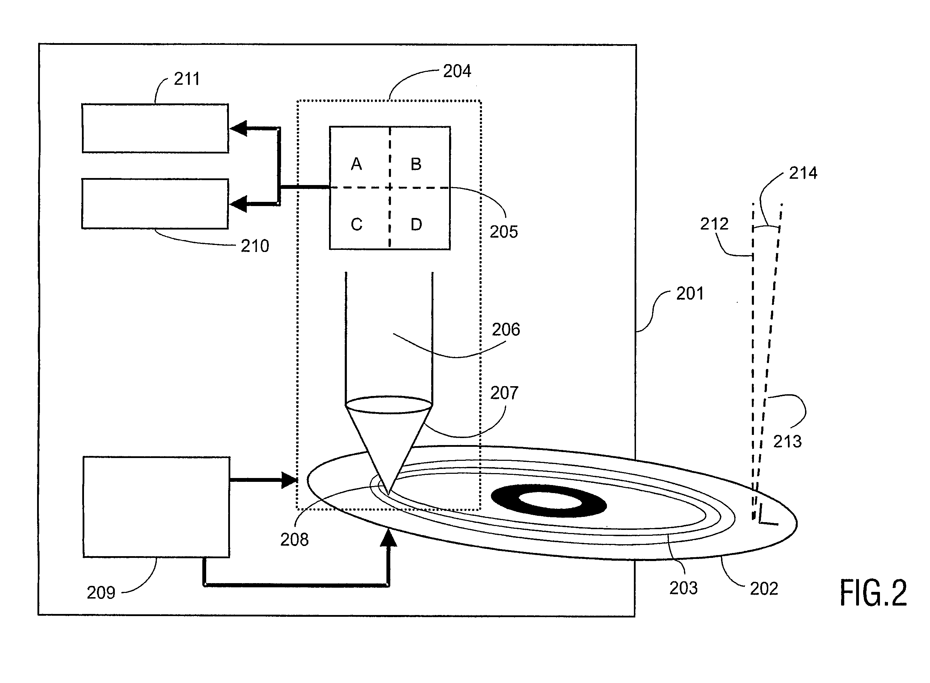

Figure 2 shows a block diagram of a device 201 according to the invention. An optical disc 202 is inserted into the device 201 for being scanned by the device 201. The optical disc 202 comprises a pattern of substantially parallel data tracks 203. The optical disc may for example be a CD or a DVD. The scanning may, for example, be performed to read data from or write data onto the optical disc 202. The scanning may also be performed for testing the quality of the optical disc 202. The device 201 comprises an optical pick up unit (OPU) 204 for converging a light beam 206 into a spot 208 on a data track of the pattern. Means 209 for moving the spot 208 relative to the pattern of data tracks 203 are provided. The OPU 204 comprises an objective lens 207 for converging the light beam 206 and a photo detector 205 for detecting the light beam 206 after reflection at the optical disc 202. The signal from the photo detector 205 is processed by means 210 for determining a radial tracking error signal and means 211 for determining a tilt angle. The tilt angle 214 may be defined as the angle between a normal 213 of the optical disc 202 and the optical axis of the pick up unit 204 or a line 212 parallel to the optical axis.

The means 209 for moving the spot 208 relative to the pattern of data tracks 203 may be realized in an actuator for moving the OPU 204 radially over the tracks. The means 209 for moving the spot 208 may also be realized in a mechanism for disc rotation. For example a spindle motor may be used for rotating the disc. In practice the center of rotation of the disc 202 does not exactly coincide with the center of the pattern of data tracks 203. When the OPU 204 is in a fixed position and the disc is rotating, several tracks will pass the light spot 208. A combination of OPU movement and disc rotation may also be used for moving the spot 208 relative to the pattern 203.

Different types of radial tracking error signals are known. Often used are Radial Push Pull (RPP) signals, Differential Phase Detection (DPD) and Differential Time Detection (DTD2, DTD4). Some types of radial tracking error signal require a split photo detector. The photo detector 205 may be divided in two or more parts, depending on the type of radial tracking error signal used by the device. Alternatively, two or more detectors may be used.

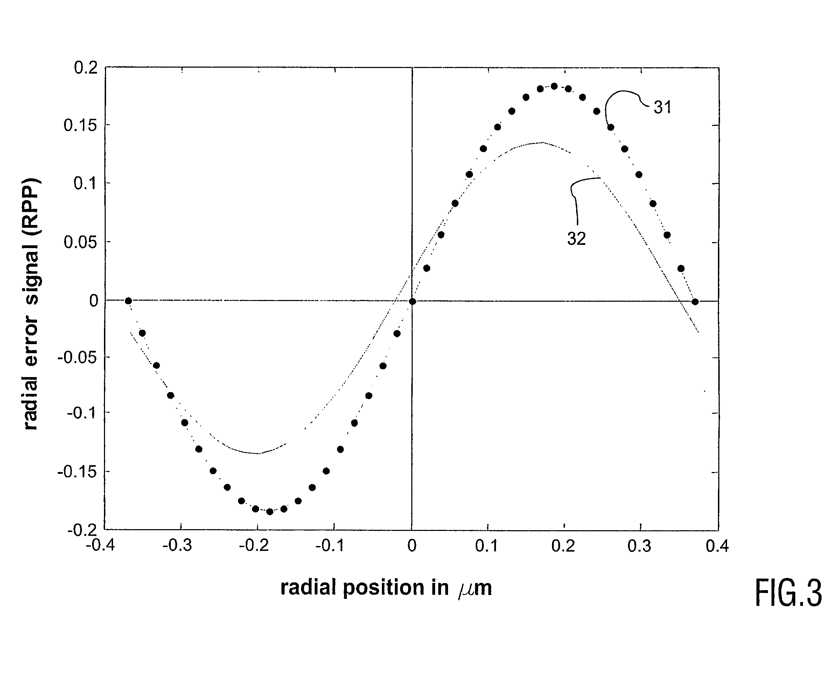

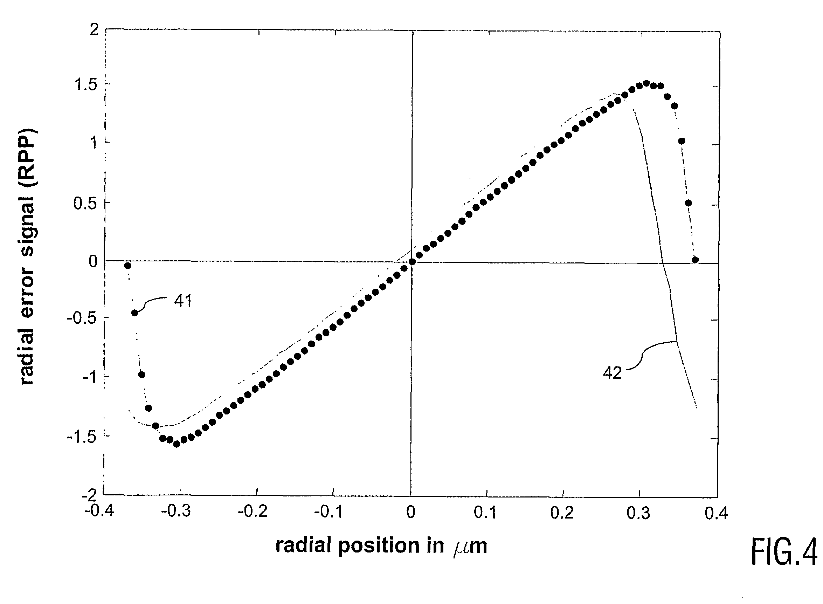

Two periodic signals, obtained from different types of radial tracking error signals, are shown in Figure 3 and Figure 4. In Figure 3 A Radial Push Pull (RPP) signal is shown as a function of the radial deviation. This signal may be obtained by sampling the RPP signal while the spot is moving across the pattern of data tracks. Thus a periodic RPP signal is obtained as a function of time. When it is assumed that the spot moves across the pattern with constant velocity, which is approximately true for one period of the periodic signal, the signal may be regarded to be a function of the deviation. For RPP a detector 205 with two halves is used. In this event a split detector 205 is realized in that the outputs A and C are summed as are the outputs B and D. The RPP signal equals the output difference of the two detector halves, divided by the total detector output. The RPP signal is often used for radial tracking and can easily be obtained by a person skilled in the art. A symmetric dotted line 31 denotes the RPP signal when no beam landing error or disc tilt occurs. In the event of a beam landing error but no disc tilt, the RPP signal would also be a symmetric signal. A solid line 32 denotes the RPP signal when a certain amount of disc tilt occurs. In the event of disc tilt, the RPP signal is not symmetric. The means 211 for detecting disc tilt in device 201 is arranged for detecting an asymmetry in the periodic signal 32 as described later on.

In Figure 4 A Differential Time Detection (DTD) signal is shown as a function of the radial deviation. For obtaining a DTD signal, the outputs of four detector parts, A, B, C, and D are acquired and processed while the spot moves along a data track. When the spot center deviates from the track center, not all detector parts 205A-205D will detect an information pit on the data track at the same time. For determining a DTD signal the time differences between zero crossings of the signals from four detector parts 205A-205D are used. The DTD signal is often used for radial tracking and can easily be obtained by a person skilled in the art. An advantage of the DTD signal is that it is hardly affected by beam landing errors or defocus. The periodic DTD signal may be obtained in a way similar to the way for obtaining the periodic RPP signal, by detennining a DTD signal while the spot moves radially across the track pattern. In Figure 4 a symmetric dotted line 41 denotes a DTD signal when no disc tilt occurs. A solid line 42 denotes a DTD signal when disc tilt does occur. In the event of disc tilt, the DTD signal is not symmetric. The means 211 for detecting disc tilt in device 201 is arranged for detecting an asymmetry in the periodic signal 42 as described hereafter.

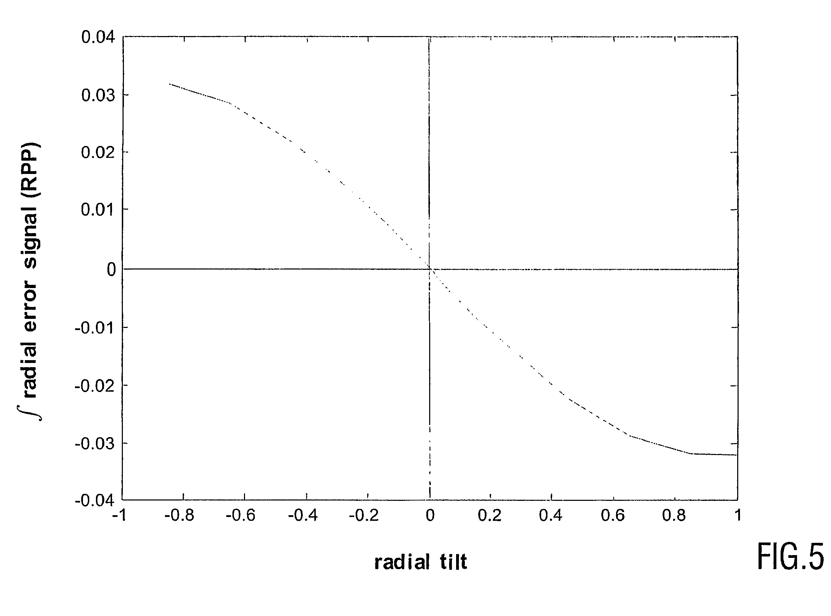

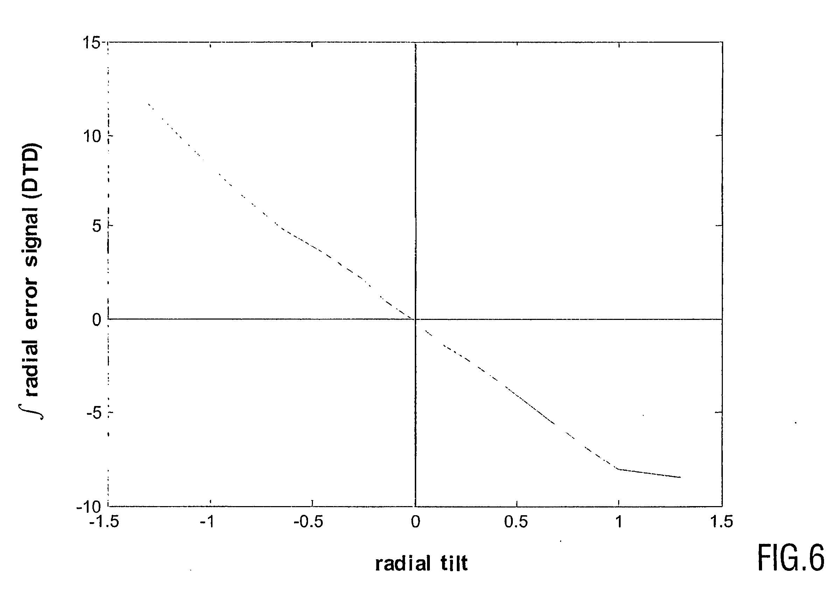

Asymmetry may for example be detected by integrating the periodic signal over n periods (*n* ≥ 1). Integration may for example be realized by including a low pass filter in the tilt angle detection means 211. Examples of the relation between disc tilt and the integral of the periodic signal are shown in Figure 5 and Figure 6. Both figures illustrate that the integral over the radial tracking error signal is a good indicator of disc tilt. The more disc tilt occurs, the greater the integral becomes. The sign of the integral denotes the direction of the disc tilt. Figure 5 shows the relation between the integral over an integer number of periods of a RPP signal. Figure 6 shows the relation between the integral over an integer number of periods of a DTD signal.

Asymmetry may also be detected by examining the zero crossings in the periodic signal. When no disc tilt occurs and the spot center is located at the center of a track, the radial tracking error signal is zero. When the spot is located halfway between two tracks, the radial tracking error signal is also zero. The distance between two zero crossings equals half the track pitch (the track pitch of a DVD is about 0.37 m). When disc tilt occurs, the periodic signal becomes asymmetric. As a symptom of the asymmetry the zero crossings in the periodic signal are shifted. A shift of the zero crossings may be detected by comparing the distances between subsequent zero crossings. When for example, a first distance between the zero crossing representing a track center and the zero crossing representing the nearest halfway point between two tracks at the left of the track and a second distance between the track center and the nearest halfway point at the right are not equal, an asymmetry exists. The comparing of the two distances may be done by subtracting or dividing the two distances.

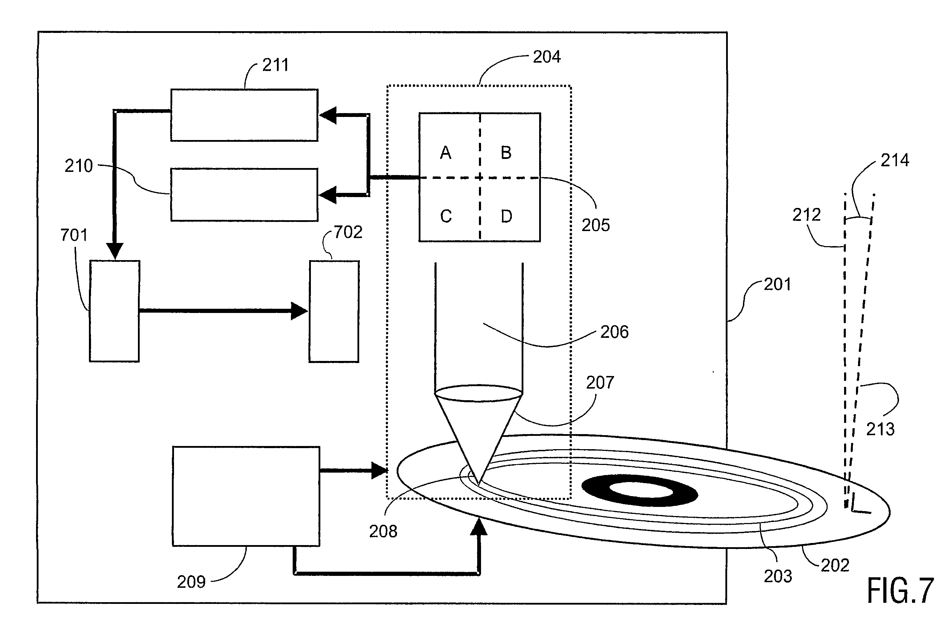

The device shown in Figure 7 comprises all features of the device shown in Figure 2. The device further comprises a memory 701 for memorizing detected tilt angles for positions on the disc. The tilt angles are detected by means 211 for detecting disc tilt as described above, while the spot 208 moves radially across the pattern of data tracks 203. The device also comprises means 702 for creating a tilt map of the optical disc depending on memorized tilt angles. The tilt map comprises the tilt angles of the positions on the disc of which the tilt angle is detected and also comprises estimated tilt angles for other positions on the disc 202. The estimated tilt angles are calculated by means 702 depending on the detected tilt angles, for example, by averaging the detected tilt angles at one or more nearby positions. The means 702 for creating a tilt map may, for example, be a dedicated processor or a processor controlled by software. The tilt map may be used during data recording or retrieval, for neutralizing possible negative effects of disc tilt. Several methods for correcting disc tilt, such as tilting the disc 202 or the objective lens 207, or using signal processing for correcting a disturbed data signal are well known to persons skilled in the art.

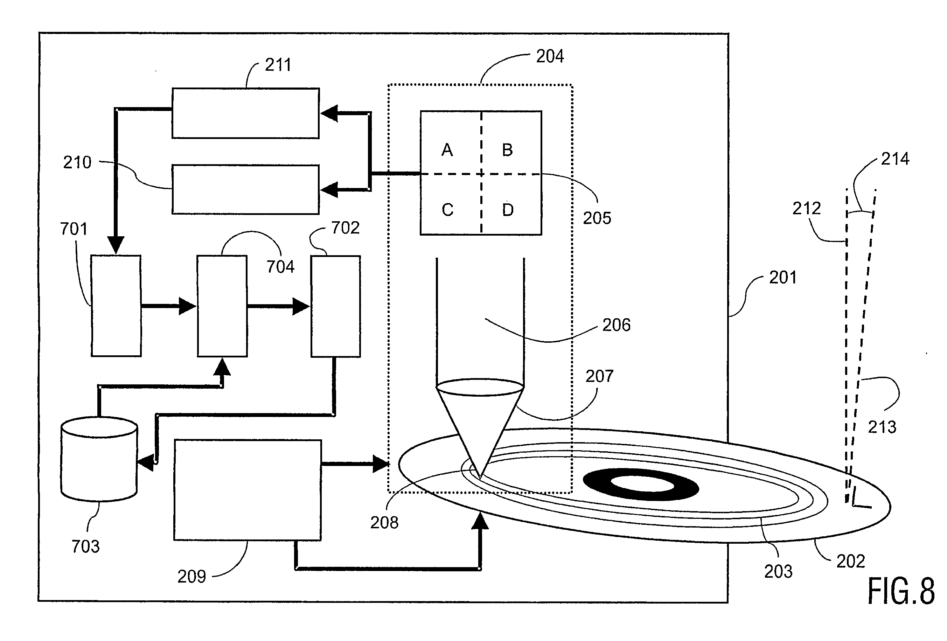

Figure 8 shows a further embodiment of the device shown in Figure 7 and further comprises a memory 703 for storing models of tilted discs and means 704 for comparing the memorized tilt angles in memory 701 to the models. One example of a model describes a flat disc 202, which is tilted with respect to a surface normal to the optical axis of the OPU 204. In this model, all positions on the disc have the same tilt angle. Disc tilt also occurs when a disc 202 is not flat. A disc 202 may for example be dish shaped or saddle shaped due to manufacture errors, or bent due to mistreatment by a user. The memory 703 comprises several models for different types of non flat discs. Means 704 compares the memorized tilt angles to the stored models. The model that best fits the memorized tilt angles is used by means 702 for creating a detailed tilt map of the disc 202. The tilt map may be stored on memory 703 or another memory, together with information which uniquely identifies the disc 202. When the tilt map is stored, it can later be retrieved when the disc is used again and the scanning may start without first having to perform the tilt map creating procedure.

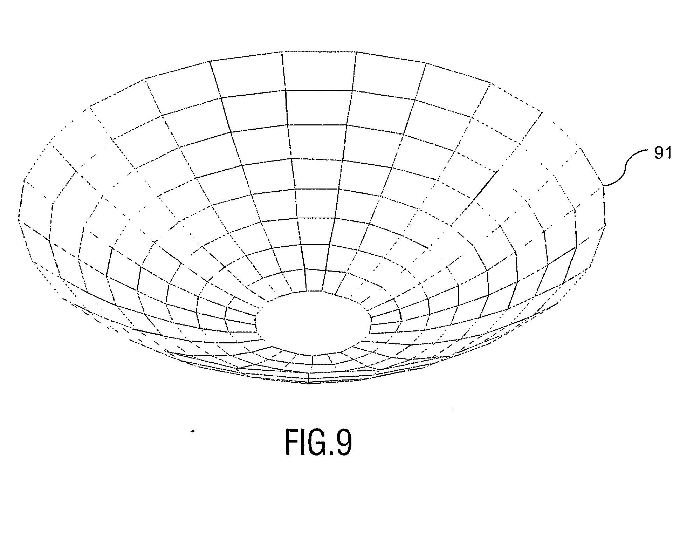

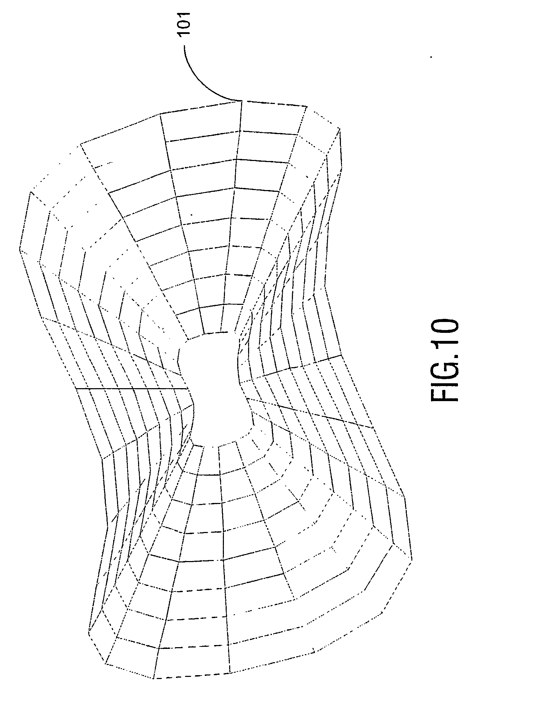

Figure 9 and Figure 10 show examples of exaggerated models of non flat discs. Figure 9 shows an exaggerated example 91 of a dish shaped disc. From a few known tilt angles for points with different radial positions on the disc, a complete tilt map can be created by means 702, using the model of the dish shaped disc. Figure 10 shows an exaggerated example 101 of a saddle shaped disc. From a few known tilt angles for points with different radial and angular positions on the disc, a complete tilt map can be created by means 702, using the model of the saddle shaped disc.

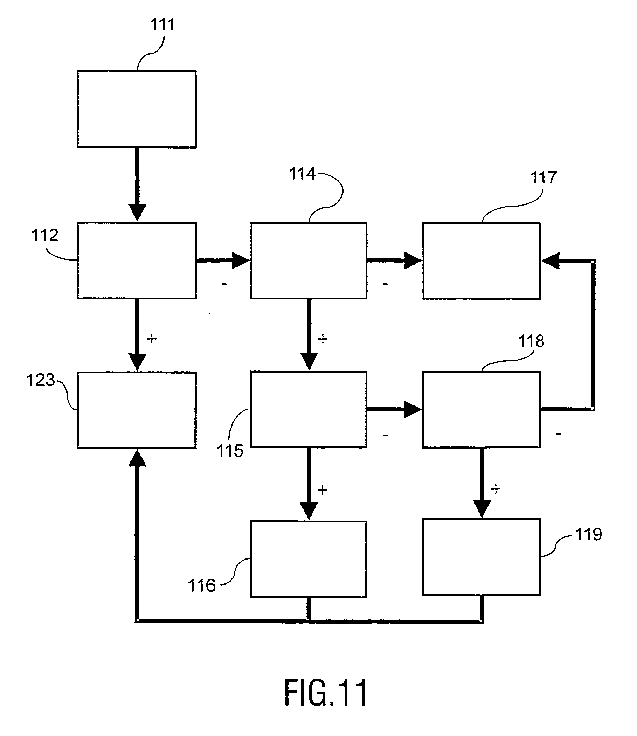

Figure 11 shows a flow diagram of a preferred disc tilt detection procedure for execution in a playback or recorder device for optical discs. In *insertion* step 111 a disc is inserted in the device and a focus servo and a tracking servo are switched on. The focus servo serves for detecting and correcting the spot position in the vertical direction. The tracking servo serves for detecting and correcting the spot position in the radial direction for keeping the spot on track while scanning the disc. In *read attempt* step 112 an attempt is made to read data from the disc. If the attempt is successful, the scanning of the disc may start in *scanning* step 113. The scanning may serve for reading data from or writing data onto the data tracks of the disc. If the attempt is not successful, a jitter is analyzed in an optional *jitter analysis* step 114. Analyzing jitter is a well known method for identifying the origin of problems with reading data from a disc. When it is concluded from the jitter analysis that disc tilt is not the cause of the reading problems, an error message may be provided in *error* step 117 or other correction methods may be applied. When disc tilt turns out to be the problem or when the optional step 114 is not performed, a disc tilt measurement may be started in *first tilt measure* step 115. For the disc tilt measurement first the tracking servo is switched off and a spindle motor is switched on for rotating the disc. While the disc is rotating and the OPU is in a stationary position, several tracks pass the light spot. While the data tracks move under the light spot, the periodic radial tracking error signal is obtained and disc tilt is determined. If the disc tilt detection is successful, the tilt detection is repeated several times *in first tilt mapping* step 116, with the OPU in different radial positions. Then a tilt map is created depending on memorized tilt angles, possibly using disc tilt models as described above. If the disc tilt detection in step 115 is not successful, a second attempt for detecting disc tilt will be made in step *second tilt measure* 118. In this event, the disc rotation is stopped and the OPU is radially moved across the pattern of data tracks. While the light spot moves over the data tracks and the periodic radial tracking error signal is obtained, disc tilt is determined. If the disc tilt detection is successful, the tilt detection is repeated several times in *second tilt mapping* step 119, with the disc in different angular positions. Then a tilt map is created depending on memorized tilt angles, possibly using disc tilt models as described above. If the disc tilt detection in step 118 is not successful, an error message may be provided in step 117 or other correction methods may be applied. After successfully creating a tilt map in step 116 or step 119, the scanning of the disc may start in step 113 and the tilt map is used for correcting for disc tilt during the scanning of the disc.

It is noted that the disc described above may also be a record carrier with a non circular shape, such as a rectangular or triangular card. When, for example, using a rectangular shaped card, moving a spot 'radially across the pattern of substantially parallel data tracks' means moving the spot over the pattern perpendicular to the data tracks. For rectangular cards disc rotation is a possible way for moving the pattern of data tracks relative to a stationary or moving spot, but may not be very convenient. When using rectangular cards disc rotation is preferably substituted by disc translation. A Radial Push Pull signal may still be determined, although a Perpendicular Push Pull signal might be a better term for describing the tracking error signal.

It is noted that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware.

## Claims

1. A device (201) for scanning an optical disc (202), the disc (202) comprising a pattern (203) of substantially parallel data tracks, the device (201) comprising:
- an optical pick up unit (204) for creating, from a light beam (206), a spot 208 on a data track of the pattern (203);
- means (209) for moving the spot (208) relative to the pattern (203);
- means (210) for determining a radial tracking error signal, the radial tracking error signal indicating a deviation of the spot (208) relative to the data track, the means (210) for determining the radial tracking error signal being arranged for determining a periodic signal (31, 32, 41, 42) from the radial tracking error signal while the spot (208) is radially moving across the pattern (203), a period of the periodic signal (31, 32, 41, 42) corresponding to a pitch of the data tracks; and
- means (211) for detecting a tilt angle (214) between an optical axis of the pick up unit and the optical disc (202), the means (211) for detecting the tilt angle (214) by detecting an asymmetry in the periodic signal (31, 32, 41, 42) during the period,
**characterized in that** the device comprises means (701) for memorizing detected tilt angles (214) for positions on the disc (202) and means (702) for creating a tilt map of the optical disc (202) depending on memorized tilt angles (214), the tilt map comprising estimated tilt angles for other positions on the disc.

2. The device (201) as claimed in claim 1, wherein the means (211) for detecting the tilt angle (214) is arranged for integrating the periodic signal (31, 32, 41, 42) over an integer number of periods.

3. The device (201) as claimed in claim 1, wherein the means for detecting the tilt angle (214) is arranged for determining a shift of a zero crossing of the periodic signal (31, 32, 41, 42).

4. The device (201) as claimed in claim 1, further **characterized in that** the means for determining the radial tracking error signal is arranged for determining a radial push pull (RPP) signal or a differential time detection (DTD) signal.

5. The device (201) as claimed in claim 1, wherein the means (208) for moving the spot (209) comprises an actuator for radially moving the pick up unit (204) across the pattern (203), while the disc (202) is in a stationary position.

6. The device (201) as claimed in claim 1, wherein the means (209) for moving the spot (208) comprises means for rotating the disc (202), while the pick up unit (204) is in a stationary position.

7. The device (201) as claimed in claim 1, wherein the means (209) for moving the spot (208) comprises means for rotating the disc (202) and an actuator for radially moving the pick up unit (204) across the pattern (203), while the disc (202) is rotating.

8. The device (201) as claimed in claim 1, further comprising means for storing the tilt map and information which uniquely identifies the corresponding optical disc, and means for retrieving the tilt map when the corresponding optical disc is used again later.

9. The device (201) as claimed in claim 1, further comprising :
- a memory (703) for storing models of tilted discs (202);
- means (704) for comparing the memorized tilt angles (214) to the models for selecting an appropriate model, which model resembles the disc (202);
- and wherein the means (702) for creating the tilt map are arranged for creating a tilt map depending on the memorized tilt angles (214) and the appropriate model.

10. A method for detecting a tilt angle (214) of a part of an optical disc (202), the method comprising the steps of:
- moving a light spot (208) radially across a pattern (203) of substantially parallel data tracks on the optical disc (202);
- determining a periodic signal (31, 32, 41, 42) from a radial tracking error signal during moving the spot (208) radially across the pattern (203), the radial tracking error signal indicating a deviation of the spot (208) relative to a data track, a period of the periodic signal (31, 32, 41, 42) corresponding to a pitch of the data tracks; and
- detecting an asymmetry in the periodic signal (31, 32, 41, 42) during the period for detecting the tilt angle (214) of the part of the optical disc (202),
**characterized in that** the method comprises the steps of
- memorizing detected tilt angles (214) for positions on the disc (202), and creating a tilt map of the optical disc (202) depending on memorized tilt angles (214), the tilt map comprising estimated tilt angles for other positions on the disc.

11. A computer program product operative to cause a processor to perform the method of claim 10.

## Patentansprüche

1. Einrichtung (201) zum Abtasten einer optischen Platte (202), wobei die Platte (202) ein Muster (203) von im Wesentlichen parallelen Datenspuren umfasst, wobei die Einrichtung (201) umfasst:
- eine optische Abtasteinheit (204) zum Erzeugen, aus einem Lichtstrahl (206), eines Lichtflecks (208) auf einer Datenspur des Musters (203);
- Mittel (209) zum Bewegen des Lichtflecks (208) relativ zu dem Muster (203);
- Mittel (210) zum Bestimmen eines radialen Spurfehlersignals, wobei das radiale Spurfehlersignal eine Abweichung des Lichtflecks (208) relativ zu der Datenspur anzeigt, wobei die Mittel (210) zum Bestimmen des radialen Spurfehlersignals dafür vorgesehen sind, ein periodisches Signal (31, 32, 41, 42) aus dem radialen Spurfehlersignal zu bestimmen, während sich der Lichtfleck (208) radial über das Muster (203) bewegt, wobei eine Periode des periodischen Signals (31, 32, 41, 42) einem Abstand der Datenspuren entspricht; und
- Mittel (211) zum Detektieren eines Neigungswinkels (214) zwischen einer optischen Achse der Abtasteinheit und der optischen Platte (202), wobei die Mittel (211) den Neigungswinkel (214) detektieren, indem sie eine Asymmetrie in dem periodischen Signal (31, 32, 41, 42) während der Periode detektieren, **dadurch gekennzeichnet, dass** die Einrichtung Mittel (701) Mittel zum Speichern detektierter Neigungswinkel (214) für Positionen auf der Platte (202) und Mittel (702) zum Erzeugen einer Neigungskarte der optischen Platte (202) in Abhängigkeit von gespeicherten Neigungswinkeln (214) umfasst, wobei die Neigungskarte geschätzte Neigungswinkel für andere Positionen auf der Platte umfasst.

2. Einrichtung (201) nach Anspruch 1, wobei die Mittel (211) zum Detektieren des Neigungswinkels (214) dafür vorgesehen sind, das periodische Signal (31, 32, 41, 42) über eine ganzzahlige Anzahl von Perioden zu integrieren.

3. Einrichtung (201) nach Anspruch 1, wobei die Mittel zum Detektieren des Neigungswinkels (214) dafür vorgesehen sind, eine Verschiebung eines Nulldurchgangs des periodischen Signals (31, 32, 41, 42) zu bestimmen.

4. Einrichtung (201) nach Anspruch 1, ferner **dadurch gekennzeichnet, dass** die Mittel zum Bestimmen des radialen Spurfehlersignals dafür vorgesehen sind, ein radiales Push-Pull- (RPP-) Signal oder ein Differential Time Detection (DTD-) Signal zu bestimmen.

5. Einrichtung (201) nach Anspruch 1, wobei die Mittel (209) zum Bewegen des Lichtflecks (208) einen Aktor zum radialen Bewegen der Abtasteinheit (204) über das Muster (203) umfassen, während sich die Platte (202) in einer stationären Position befindet.

6. Einrichtung (201) nach Anspruch 1, wobei die Mittel (209) zum Bewegen des Lichtflecks (208) Mittel umfassen, um die Platte (202) in Rotation zu versetzen, während sich die Abtasteinheit (204) in einer stationären Position befindet.

7. Einrichtung (201) nach Anspruch 1, wobei die Mittel (209) zum Bewegen des Lichtflecks (208) Mittel umfassen, um die Platte (202) in Rotation zu versetzen, und einen Aktor, um die Abtasteinheit (204) radial über das Muster (203) zu bewegen, während die Platte (202) rotiert.

8. Einrichtung (201) nach Anspruch 1, welche ferner Mittel zum Speichern der Neigungskarte und von Informationen, welche die entsprechende optische Platte eindeutig identifizieren, und Mittel, um die Neigungskarte abzurufen, wenn die betreffende optische Platte später wieder verwendet wird, umfasst.

9. Einrichtung (201) nach Anspruch 1, welche ferner umfasst:
- einen Speicher (703) zum Speichern von Modellen von geneigten Platten (202);
- Mittel (704) zum Vergleichen der gespeicherten Neigungswinkel (214) mit den Modellen zum Auswählen eines geeigneten Modells, wobei das Modell der Platte (202) ähnlich ist;
- und wobei die Mittel (702) zum Erzeugen der Neigungskarte dafür vorgesehen sind, eine Neigungskarte in Abhängigkeit von den gespeicherten Neigungswinkeln (214) und dem geeigneten Modell zu erzeugen.

10. Verfahren zum Detektieren eines Neigungswinkels (214) eines Teils einer optischen Platte (202), wobei das Verfahren die folgenden Schritte umfasst:
- Bewegen eines Lichtflecks (208) radial über ein Muster (203) von im Wesentlichen parallelen Datenspuren auf der optischen Platte (202);
- Bestimmen eines periodischen Signals (31, 32, 41, 42) aus einem radialen Spurfehlersignal während der Bewegung des Lichtflecks (208) radial über das Muster (203), wobei das radiale Spurfehlersignal eine Abweichung des Lichtflecks (208) relativ zu einer Datenspur anzeigt, wobei eine Periode des periodischen Signals (31, 32, 41, 42) einem Abstand der Datenspuren entspricht; und
- Detektieren einer Asymmetrie in dem periodischen Signal (31, 32, 41, 42) während der Periode zum Detektieren des Neigungswinkels (214) des Teils der optischen Platte (202),
**dadurch gekennzeichnet, dass** das Verfahren die folgenden Schritte umfasst:
- Speichern detektierter Neigungswinkel (214) für Positionen auf der Platte (202) und Erzeugen einer Neigungskarte der optischen Platte (202) in Abhängigkeit von gespeicherten Neigungswinkeln (214), wobei die Neigungskarte geschätzte Neigungswinkel für andere Positionen auf der Platte umfasst.

11. Computerprogrammprodukt, welches dazu dient, einen Prozessor zu veranlassen, das Verfahren nach Anspruch 10 auszuführen.

## Revendications

1. Dispositif (201) pour balayer un disque optique (202), le disque (202) comprenant une configuration (203) de pistes de données essentiellement parallèles, le dispositif (201) comprenant :
- une unité de capture optique (204) pour créer, à partir d'un faisceau de lumière (206), un spot 208 sur une piste de données de la configuration (203);
- un moyen (209) pour déplacer le spot (208) par rapport à la configuration (203);
- un moyen (210) pour déterminer un signal d'erreur radiale de suivi de piste, le signal d'erreur radiale de suivi de piste indiquant une déviation du spot (208) par rapport à la piste de données, le moyen (210) pour déterminer le signal d'erreur radiale de suivi de piste étant disposé pour déterminer un signal périodique (31, 32, 41, 42) à partir du signal d'erreur radiale de suivi de piste pendant que le spot (208) est déplacé radialement en travers de la configuration de pistes (203), un cycle du signal périodique (31, 32, 41, 42) correspondant à un pas des pistes de données; et
- un moyen (211) pour détecter un angle d'inclinaison (214) entre un axe optique de l'unité de capture optique et le disque optique (202), le moyen (211) pour détecter l'angle d'inclinaison (214) en détectant une asymétrie dans le signal périodique (31, 32, 41, 42) pendant le cycle, **caractérisé en ce que** le dispositif comprend un moyen (701) pour mémoriser des angles d'inclinaison détectés (214) pour des positions sur le disque (202) et un moyen (702) pour créer une carte d'inclinaisons du disque optique (202) en fonction des angles d'inclinaison mémorisés (214), la carte d'inclinaisons comprenant des angles d'inclinaison estimés pour d'autres positions sur le disque.

2. Dispositif (201) selon la revendication 1, dans lequel le moyen (211) pour détecter l'angle d'inclinaison (214) est disposé pour intégrer le signal périodique (31, 32, 41, 42) sur un nombre entier de cycles.

3. Dispositif (201) selon la revendication 1, dans lequel le moyen pour détecter l'angle d'inclinaison (214) est disposé pour déterminer un décalage d'un passage par zéro du signal périodique (31, 32, 41, 42).

4. Dispositif (201) selon la revendication 1, **caractérisé en outre en ce que** le moyen pour déterminer le signal d'erreur radiale de suivi de piste est disposé pour déterminer un signal de push-pull radial (RPP) ou un signal de détection de temps différentiel (DTD).

5. Dispositif (201) selon la revendication 1, dans lequel le moyen (208) pour déplacer le spot (209) comprend un actionneur pour déplacer radialement l'unité de capture (204) au travers de la configuration (203), pendant que le disque (202) est en une position stationnaire.

6. Dispositif (201) selon la revendication 1, dans lequel le moyen (209) pour déplacer le spot (208) comprend un moyen pour faire tourner le disque (202) pendant que l'unité de capture (204) est en une position stationnaire.

7. Dispositif (201) selon la revendication 1, dans lequel le moyen (209) pour déplacer le spot (208) comprend un moyen pour faire tourner le disque (202) et un actionneur pour déplacer radialement l'unité de capture (204) au travers de la configuration (203) pendant que le disque (202) est en rotation.

8. Dispositif (201) selon la revendication 1, comprenant en outre un moyen pour stocker la carte d'inclinaisons et une information qui identifie le disque optique correspondant de façon unique, et un moyen pour récupérer la carte d'inclinaisons quand le disque optique correspondant est à nouveau utilisé ultérieurement.

9. Dispositif (201) selon la revendication 1, comprenant en outre :
- une mémoire (703) pour stocker des modèles de disques inclinés (202);
- un moyen (704) pour comparer les angles d'inclinaison mémorisés (214) aux modèles pour sélectionner un modèle approprié, lequel modèle ressemble au disque (202);
- et dans lequel le moyen (702) pour créer la carte d'inclinaisons est disposé pour créer une carte d'inclinaisons en fonction des angles d'inclinaison mémorisés (214) et du modèle approprié.

10. Procédé pour détecter un angle d'inclinaison (214) d'une partie d'un disque optique (202), le procédé comprenant les étapes de :
- déplacement d'un spot de lumière (208) radialement au travers d'une configuration (203) de pistes de données essentiellement parallèles sur le disque optique (202);
- détermination d'un signal périodique (31, 32, 41, 42) à partir d'un signal d'erreur radiale de suivi de piste pendant un déplacement du spot (208) radialement au travers de la configuration (203), le signal d'erreur radiale de suivi de piste indiquant une déviation du spot (208) par rapport à une piste de données, un cycle du signal périodique (31, 32, 41, 42) correspondant à un pas des pistes de données; et
- détection d'une asymétrie dans le signal périodique (31, 32, 41, 42) pendant le cycle pour détecter l'angle d'inclinaison (214) de la partie du disque optique (202), **caractérisé en ce que** le procédé comprend les étapes de
- mémorisation des angles d'inclinaison détectés (214) pour des positions sur le disque (202), et création d'une carte d'inclinaisons du disque optique (202) en fonction des angles d'inclinaison mémorisés (214), la carte d'inclinaisons comprenant des angles d'inclinaison estimés pour d'autres positions sur le disque.

11. Produit programme informatique fonctionnel pour faire qu'un processeur réalise le procédé de la revendication 10.
